# FASCICULE DE BREVET EUROPEEN

(11) **EP 1 089 876 B1**
(45) Date de publication et mention de la délivrance du brevet: **25.01.2006**
(21) Numéro de dépôt: 99925119.2
(22) Date de dépôt: 17.06.1999
(51) Int. Cl.: B32B 27/08, B29C 45/14, B60J 1/00

(54) **VITRAGE EN MATIERE PLASTIQUE AVEC AJOUT DE MATIERE PLASTIQUE SURMOULE**
KUNSTSTOFFVERGLASUNG MIT UMGOSSENEM KUNSTSTOFFRAHMENELEMENT
PLASTIC GLAZING SHEET WITH ADDED OVERMOULDED PLASTIC MATERIAL

(30) Priorité: 19.06.1998 FR 9807768
(43) Date de publication de la demande: 11.04.2001
(73) Titulaire: SAINT-GOBAIN GLASS FRANCE, 92400 Courbevoie (FR)
(72) Inventeur: BRAVET, Jean-Louis, F-60150 Thourotte (FR); BENYAHIA, Rym, F-93000 Bobigny (FR); BUREAU, Bernard, F-27400 Louviers (FR); DUCREUSOT, Fabrice, F-71100 Chalon sur Saône (FR)
(74) Mandataire: Muller, René
(86) Numéro de dépôt international: PCT/FR1999/001454
(87) Numéro de publication internationale: WO 1999/065678

(56) Documents cités:
- EP-A- 0 255 218
- EP-A- 0 528 711
- EP-A- 0 728 576
- WO-A-98/29274
- FR-A- 2 649 749
- GB-A- 2 092 511
- NL-A- 8 501 897
- US-A- 4 857 376
- US-A- 4 894 972
- US-A- 4 946 531
- US-A- 5 419 088

## Description

La présente invention a trait à des produits en matière plastique, essentiellement plats et au moins en partie transparents, qui sont adaptés par leur haute qualité optique à une application en tant que vitrages.

Pour la constitution de vitrages particuliers, notamment dans le domaine du bâtiment ou des véhicules de transport, le remplacement du verre par une matière plastique comporte des avantages et des inconvénients.

Par rapport au verre, les matières plastiqués sont plus légères, ce qui constitue un avantage déterminant pour les véhicules urbains à moteur électrique, dans la mesure où une augmentation de leur autonomie est cruciale. Dans de tels véhicules, on pourrait même envisager de réaliser en matière plastique d'un seul bloc des portières entières, voire des côtés complets de la carrosserie, y compris les fenêtres, et d'en peindre éventuellement une partie inférieure. D'une manière générale, la légèreté des surfaces transparentes est intéressante relativement aux véhicules de transport modernes, dans la mesure où le progrès technique va de pair avec l'intégration au vitrage de fonctions toujours plus nombreuses (chauffage de lunette arrière, antenne radio, dégivrage du pare-brise, coloration pour empêcher le réchauffement de l'habitacle en cas de fort ensoleillement, incorporation de composés électrochromes, affichage d'informations sur le pare-brise...), et avec des surfaces vitrées sans cesse accrues. Il en résulte un alourdissement général du véhicule nuisible sur le plan de la consommation énergétique.

D'autre part, les matières plastiques sont susceptibles de procurer, par rapport au verre, des conditions de sécurité améliorées, et une protection contre le vol supérieure, du fait de leur résilience supérieure.

Un atout non moins important des matières plastiques par rapport au verre réside dans leur aptitude supérieure à être aisément transformées en formes complexes.

Enfin, l'aptitude des feuilles de matière plastique à être plus ou moins déformées de manière réversible, permet d'en envisager des modes d'installation dans les baies de carrosserie considérablement simplifiés, avec encliquetage, par l'intérieur comme par l'extérieur du véhicule.

A l'inverse, cette rigidité relativement faible qui vient d'être mentionnée constitue, à l'évidence, un handicap par rapport au verre, au même titre qu'une transparence et des propriétés optiques inférieures et, principalement, qu'une rayabilité supérieure.

Plusieurs approches ont, jusqu'à présent, été adoptées pour tenter de surmonter ce triple handicap.

Selon une première approche, on forme par extrusion des bandes planes de matière plastique, on découpe une pièce aux dimensions requises, on la fixe sur un dispositif de thermoformage, on procède au thermoformage par contact avec au moins une surface solide de moule et, éventuellement à l'aide d'air comprimé ou avec aspiration. Les dispositifs mis en oeuvre sont encombrants et, en particulier, de longueurs excessives. Les rendements s'avèrent relativement faibles et les pertes de matière inévitables. Une haute qualité du produit n'est atteinte qu'au prix d'une mise au point difficile du procédé et, éventuellement, d'un traitement supplémentaire de resurfaçage.

D'autre part, la rayabilité des matières plastiques, mentionnée précédemment, est telle que, dans leurs applications optiques ou en éléments transparents, il est nécessaire de revêtir les pièces mises en forme d'un vernis dur.

Il convient donc de garantir une qualité optique supérieure à celle obtenue par l'extrusion susmentionnée, y compris après la formation du revêtement dur anti-rayures, qui doit être effectuée dans des conditions industrielles parfaites.

Ceci constitue le cadre général de l'invention, dans lequel celle-ci résout son problème propre : augmenter sensiblement les fonctions, donc les possibilités d'application, d'emploi, des vitrages plastiques.

Cet objectif est à présent réalisé par l'invention, qui a pour objet un produit essentiellement plat et en matière plastique, au moins en partie transparent et dont une partie au moins de la surface extérieure est constituée par un ajout de matière plastique surmoulé. En d'autres termes, le nouveau vitrage mis à disposition est essentiellement constitué d'une première matière plastique et a au moins un appendice surmoulé en une seconde matière plastique. Sont alors avantageusement mises à profit les propriétés physiques différentes et recherchées de cette seconde matière plastique : adhésion à la première matière plastique, aptitude à la déformation élastique, étanchéité, réversibilité d'un écrasement durable, rigidité, résistance à la flexion, résistance mécanique (en particulier à l'écrasement ou la compression)... L'ajout de matière plastique surmoulé peut être situé sur l'une ou l'autre des deux faces du produit plat : il peut s'agir d'une embase de rétroviseur intérieur surmoulée sur un pare-brise en matière plastique, ou d'un appendice de positionnement, centrage ou repérage quelconque, ou encore d'un plot de fixation.

Une partie au moins de l'ajout de matière plastique est encapsulée à la périphérie du produit. Cet encapsulat consiste, éventuellement, en un joint périphérique, dont une lèvre épousant parfaitement la baie de carrosserie, assume une fonction d'étanchéité, en un plot de fixation, en une ceinture périphérique rigidifiante...

Le produit de l'invention a une âme en matière plastique, une peau qui comprend au moins un film en matière plastique supportant une couche anti-rayures et disposée sur une face au moins de l'âme en retrait par rapport aux bords de celle-ci, à l'intérieur de la surface délimitée par la partie périphérique encapsulée de l'ajout de matière plastique.

L'âme assume l'essentiel des propriétés mécaniques, notamment de la résistance à la flexion, dans l'ensemble qu'elle forme avec la ou les deux peaux et, d'autant plus que ces dernières sont minces, l'épaisseur de chacune étant, par exemple, de l'ordre de 0,25 mm. Son épaisseur peut être de l'ordre de 1 à 10 mm. Son matériau est choisi parmi les thermoplastiques tels que polycarbonate, poly(méthacrylate de méthyle), copolymère éthylène/acétate de vinyle, poly(téréphtalate d'éthylèneglycol), poly(téréphtalate de butylèneglycol), copolymères polycarbonates/polyester, polyuréthane, copolymère cyclooléfinique du type éthylène/norbornène, ou éthylène/cyclopentadiène, les résines ionomères, par exemple un copolymère éthylène/acide (méth)acrylique neutralisé par une polyamine, les thermodurcissables ou thermoréticulables tels que polyuréthane, polyester insaturé, copolymère éthylène/acétate de vinyle. On aura tendance à choisir un thermoplastique classique, de préférence injectable, à température de ramollissement relativement basse et bon marché, comme le polycarbonate. L'âme peut également être constituée d'une association de plusieurs épaisseurs d'une même ou de plusieurs des matières plastiques précitées.

L'épaisseur de la peau, ou de chacune des deux peaux, est avantageusement choisie au plus égale à 500 µm, de préférence comprise entre 50 et 300 µm, la peau étant constituée d'un ou plusieurs films en matériau plastique thermoformable, entre lesquels est interposée, ou sur lesquels est déposée le cas échéant au moins une couche fonctionnelle, l'un au moins de ces films pouvant par ailleurs constituer lui-même une telle couche fonctionnelle. Le matériau plastique thermoformable de ces films appartient opportunément au groupe des polycarbonate, polypropylène, poly(méthacrylate de méthyle), copolymère éthylène/acétate de vinyle, poly(téréphtalate d'éthylèneglycol), poly(téréphtalate de butylèneglycol), polyuréthane, polyvinylbutyral, et copolymère cyclooléfinique comme éthylène/norbornène ou éthylène/cyclopentadiène, copolymère polycarbonate/polyester, résine ionomère.

La couche anti-rayures a une épaisseur de l'ordre de 1 à 10 µm; elle forme généralement la surface extérieure du produit de l'invention.

Elle peut être essentiellement minérale et consister notamment en polysiloxanes et/ou en dérivés de silice et/ou d'alumine, ou mixte, telle que constituée de réseaux de chaînes moléculaires minérales et organiques entremêlées et reliées les unes aux autres au moyen de liaisons silicium-carbone. Une telle couche mixte présente d'excellentes propriétés de transparence, d'adhérence et de résistance aux rayures. Il semble que le réseau minéral confère au revêtement sa dureté et sa résistance aux rayures, le réseau organique son élasticité et sa résilience. De tels vernis sont bien connus et ont été décrits dans les demandes publiées EP-A1-0 524 417 et EP-A1-0 718 348 dont l'enseignement est ici incorporé à titre de référence ; certains sont notamment désignés par le terme "Ormocer" qui est l'abréviation de " Organically Modified Ceramic ". Il est remarquable que la température de cuisson des Ormocers soit aisément adaptable par variation des proportions relatives entre fraction polymère organique et fraction minérale. L'emploi d'un plus grand nombre de matières plastiques devient possible pour constituer le film support.

La caractéristique conforme au mode de réalisation préféré selon laquelle la ou les deux peaux sont disposées sur les faces de l'âme en retrait par rapport à leurs bords, et plus précisément à l'intérieur de la surface délimitée par la partie périphérique encapsulée de l'ajout de matière plastique, est avantageuse. Elle permet en effet de profiter au mieux de l'excellente adhésion des matériaux courants de l'ajout encapsulé, notamment thermoplastiques élastomères, sur le polycarbonate et autres matériaux constitutifs de l'âme habituels.

Les couches fonctionnelles susceptibles d'être intégrées dans une peau sont de natures variées.

Selon une première possibilité, la couche extérieure de la peau, en contact avec l'environnement, contient un agent hydrophobe/oléophobe qui confère donc cette propriété à la surface extérieure du produit. En tant qu'agent hydrophobe/oléophobe, on connaît bien les polysilanes fluorés, notamment obtenus à partir de précurseurs comportant à une extrémité une fonction hydrolysable de type alkoxy, ou halogéno servant à l'accrochage chimique au substrat et une chaîne carbonée perfluorée à l'autre extrémité, destinée à constituer la surface extérieure du produit.

L'agent hydrophobe/oléophobe est, par ordre de préférence décroissant, incorporé dans la couche anti-rayures, qui a une structure chimique proche de la sienne, ou avec laquelle il est tout au moins chimiquement compatible, ou greffé sous forme d'une couche mince d'épaisseur comprise entre 2 et 50 nm, de préférence sur la couche anti-rayures ou bien encore auto-supporté sur un film plastique, tel qu'un poly (fluorure de vinyle) (PVF) ou poly (fluorure de vinylidène) (PVDF), à appliquer de manière avantageuse directement sur la couche anti-rayures.

Conformément à une variante, au moins une couche de décor et/ou de masquage, couvrant tout ou partie de la surface du produit, est positionnée dans la peau, de préférence directement sous le film support de la couche anti-rayures.

Cette couche peut, par exemple, remplacer le décor sérigraphié déposé fréquemment à la périphérie de la face intérieure de vitrages, notamment pour véhicules automobiles, dans le but de masquer, pour un observateur situé à l'extérieur du véhicule, les éléments de carrosserie formant le cadre de la baie et le cordon de colle qui est ainsi protégé de la dégradation par rayonnement ultraviolet. Elle peut comporter des éléments de décor coloré opaque ou transparent, permettant de réaliser des éléments de couleur assortis à la carrosserie ou à l'équipement intérieur, des logos, etc.

La peau peut être munie d'une couche d'adhésion, en particulier sur sa face intérieure pour assurer la fixation avec l'âme, mais aussi entre deux films ou couches de la peau. Des adhésifs courants sont le polyvinylbutyral, le polyuréthane ou les adhésifs acryliques.

Parmi les constituants principaux facultatifs de la peau figurent aussi les couches optiquement sélectives qui sont empilées, par exemple sous la couche de décor et/ou de masquage, ou au-dessus de cette dernière sous le film support de la couche anti-rayures, ou bien même au-dessus de la couche anti-rayures. Ces couches se distinguent par une transmission élevée dans le domaine visible (longueurs d'onde de 400 à 800 nm) et une absorption et/ou une réflexion élevée dans le domaine ultraviolet (< 400 nm) et infrarouge (> 800 nm). Ces couches peuvent consister en couches métalliques minces, par exemple à base d'argent, d'épaisseurs comprises entre 2 et 35 nm, séparées entre elles ainsi que des autres couches ou films adjacents par des couches diélectriques d'oxydes ou de nitrures d'indium, étain, silicium, zinc, titane, tungstène, tantale, niobium, aluminium, zirconium..., d'épaisseurs généralement comprises entre 10 et 150 nm. Ces couches peuvent comporter au moins une couche colorée dans la masse.

L'ensemble de ces couches peut être conducteur d'électricité ; il peut appartenir à la famille des empilements anti-solaires, utilisés pour limiter l'apport de chaleur par rayonnement solaire dans des espaces fermés ou à celle des empilements bas-émissifs, utilisés au contraire pour limiter la déperdition de chaleur dans des espaces fermés, due principalement à une transmission de rayonnement infrarouge à travers le vitrage. De tels empilements sont décrits dans les brevets FR 2 708 926 et EP 0 678 484.

Selon une autre variante, la peau est munie d'un empilement de couches antireflet. Cet empilement peut comporter, par exemple, un fluorure ou un oxyfluorure d'aluminium susceptible d'être déposé en couche mince par une technique sous vide du type pulvérisation cathodique, éventuellement assistée par champ magnétique. Un tel empilement est décrit dans le brevet FR 2 745 284, dont l'enseignement est incorporé ici à titre de référence.

Conformément à d'autres caractéristiques avantageuses du produit de l'invention :
- la peau comprend un réseau conducteur d'électricité inclus, par exemple, dans une couche adhésive de polyvinylbutyral ou de polyuréthane, ou pris en sandwich entre deux telles couches, et assumant de manière connue la fonction de chauffage-dégivrage-désembuage ou d'antenne ;
- le matériau de l'ajout de matière plastique encapsulé est un élastomère tel que copolymère styrène/éthylène/butylène/styrène éventuellement modifié, polyuréthane, alliage polyuréthane-acrylique, choisi pour son adhésion à l'âme, son élasticité, sa résilience, sa couleur ou son caractère translucide selon les cas. Il est, en particulier, thermoplastique. Ce matériau ne nécessite aucun traitement préalable de primage de l'âme.

Sont particulièrement avantageux, pour leur qualité d'adhésion aux matières plastiques, et en particulier au polycarbonate, les copolymère styrène/éthylène/butylène/styrène modifié, alliage polyuréthane-acrylique.

L'invention a d'autre part pour objet un premier procédé de fabrication du produit décrit précédemment, dans lequel l'injection d'une première, puis d'une seconde matière plastique est effectuée dans un unique moule, la première matière plastique étant celle de l'âme, et la seconde celle de l'ajout encapsulé. Ce procédé a le mérite de limiter le nombre de machines d'injection mises en oeuvre et l'encombrement correspondant et de diminuer les durées de fabrication, c'est-à-dire finalement d'augmenter les rendements. Le produit ne faisant l'objet d'aucune manutention, n'a pas à être ensuite dépoussiéré.

D'une manière avantageuse sur le plan de la rapidité de la fabrication du produit de l'invention, ce procédé comprend une opération de transfert par rotation du produit de l'injection de la première matière plastique, à partir d'une première empreinte où a préalablement eu lieu l'injection de la première matière plastique, dans une seconde empreinte servant à l'injection ultérieure de la seconde matière plastique. Bien entendu, entre également dans le cadre de l'invention un procédé dans lequel plus de deux matières plastiques sont injectées successivement dans un unique moule, deux opérations d'injection successives étant chaque fois séparées par une opération de transfert par rotation telle que susmentionnée. Dans le cas de n injections, un moule comportant n empreintes réparties selon un écart angulaire de 2 Π/n par rapport à l'axe de rotation peut être utilisé. Il s'agit plus précisément d'un moule semblable au moule de multi-injection à partie mobile tournante avec empreinte, ou à chargeur rotatif décrit dans le brevet FR-B1-2 725 152, dont l'enseignement est incorporé ici à titre de référence.

Conformément à un second procédé entrant également dans le cadre de l'invention, le produit de l'invention est réalisé en injectant une première matière plastique dans un premier moule, puis en transférant le produit de cette injection dans un second moule, dans lequel est injectée une seconde matière plastique. Ce procédé n'exclue pas des opérations d'injection supplémentaires, séparées chaque fois par un transfert ou une manipulation du produit. Il n'exclue pas non plus un procédé comprenant successivement une injection dans un moule, le retrait de ce moule du produit de l'injection, la transformation de ce moule par enlèvement de parties amovibles de volume correspondant à celui de l'injection suivante, le repositionnement du produit de l'injection dans ce moule, et enfin l'injection suivante.

D'autre part, l'injection simultanée ou successive de plusieurs matières plastiques différentes en position fixe du moule fait également partie des possibilités ouvertes par les deux procédés selon l'invention.

Les procédés de fabrication du produit de l'invention évitent l'écueil de la qualité optique insuffisante des produits couramment obtenus par extrusion.

De préférence, la ou les deux peaux comprenant leur film en matière plastique supportant une couche anti-rayures sont réalisées dans un premier temps à plat sur un support, de telle sorte que leur face munie du vernis anti-rayures en formation soit exempte de tout contact mécanique, tout au moins sur leur étendue pour laquelle une qualité optique est requise. Un état de cohésion de la peau et un degré de durcissement du vernis anti-rayures intermédiaires et contrôlables sont alors atteints. En fonction de cet état et de ce degré, on procède au thermoformage des peaux, toujours en l'absence de tout contact mécanique de la face munie du revêtement anti-rayures, ou au contraire avec contact. Il en résulte à la fois une mise en forme de la peau, et l'achèvement du durcissement du revêtement anti-rayures. Le processus aboutissant à une parfaite cohésion de la peau s'achève lors de son refroidissement.

La ou les deux peaux thermoformées sont alors avantageusement maintenues en fond de moule par tout moyen approprié tel qu'aspiration, soufflage ou effet électrostatique, plusieurs de ces moyens étant éventuellement associés, avant l'injection de la première matière plastique constituant l'âme du produit de l'invention.

Dans le cas où la peau comprend un réseau conducteur d'électricité, celui-ci est de préférence formé au préalable par sérigraphie de métal.

Enfin, l'invention a également pour objet l'application du produit décrit précédemment en tant que vitrage pour le bâtiment ou les véhicules de transport, en particulier pour l'automobile.

Les exemples suivants servent à illustrer l'invention.

### EXEMPLE 1

Sur un film de 250 µm d'épaisseur de polycarbonate standard préparé à partir de Bisphénol A, commercialisé par la Société BAYER AG sous la marque enregistrée " Makrolon " et dont la température de transition vitreuse Tg est égale à 145°C, on dépose par flow coating le revêtement anti-rayures décrit dans l'exemple de la demande de brevet EP-A1-O 718 348 en un film liquide de 20 µm d'épaisseur. Après séchage, cette épaisseur est réduite à 5 µm.

Le film support revêtu est alors placé au fond d'un moule, la couche anti-rayures étant positionnée au-dessus ; l'ensemble est soumis à un traitement thermique de 155°C pendant 30 min. Une peau au sens du mode de réalisation préféré de la présente invention est alors constituée sous sa forme quasiment définitive.

Celle-ci est placée au fond d'une première forme, dans laquelle elle est maintenue par effet électrostatique, en vis à vis d'une première empreinte d'un moule de bi-injection à chargeur rotatif comportant deux empreintes diamétralement opposées par rapport à l'axe de rotation, tel que décrit dans le brevet FR-B1-2 725 152 en référence à la figure 2, la couche anti-rayures étant en contact avec la paroi de moule. On procède alors à l'injection thermoplastique d'une couche de 3,5 mm d'épaisseur de polycarbonate commercialisé par la Société GENERAL ELECTRIC sous la référence GE 121 R.

Le chargeur rotatif du moule est activé sur 180°, de sorte que le produit de l'injection du polycarbonate se retrouve positionné sur une seconde empreinte. On injecte alors un copolymère styrène/éthylène/butylène/styrène modifié de dureté 75 Shore A, de manière à former un profilé surmoulé sur toute la périphérie de la feuille de polycarbonate.

On constate, après la première injection, une parfaite adhésion du polycarbonate de l'âme à celui de la peau. Celle-ci est limitée à une surface située à l'intérieur de la bande périphérique destinée à être recouverte par l'ajout encapsulé, formé lors de la deuxième injection. Un décrochement dans le fond de la première forme du moule permet, avant la première injection, de positionner correctement la peau.

A l'issue de la seconde injection, on observe une adhésion excellente de l'ajout encapsulé sur l'âme en polycarbonate.

### EXEMPLE 2

On reproduit le mode opératoire de l'exemple 1 avec un film de 325 µm d'épaisseur du même polycarbonate standard muni, sur une face, d'un revêtement anti-rayures commercialisé par la Société GENERAL ELECTRIC sous la référence HP 92.

On réalise une sérigraphie sur le pourtour au moyen d'encre à base époxy. Le film est découpé en suivant la sérigraphie. Ses dimensions sont telles qu'il se trouve en retrait par rapport aux bords de l'âme injectée ultérieurement, comme spécifié précédemment.

On pose le film dans la cavité du moule. Il est alors procédé à l'injection de l'âme en polycarbonate, puis de l'ajout périphérique selon des opérations identiques à celles de l'exemple 1.

Le produit final présente une transparence, une qualité optique amplement suffisantes pour une application en tant que vitrage.

Le procédé de l'invention présente les avantages inhérents à la technique d'injection. L'ajout encapsulé ne recouvre pas nécessairement la totalité de la périphérie de l'âme.

L'adhésion excellente de l'ajout encapsulé sur l'âme en polycarbonate, déjà mentionnée à l'exemple 1, correspond à une force de pelage à 90° de l'ordre de 100 N/cm, avec une rupture cohésive dans le matériau d'encapsulat (c'est-à-dire que celui-ci se déchire dans l'épaisseur de la languette utilisée dans le test de pelage. En comparaison avec un élastomère thermoplastique courant tel que polypropylène ou copolymère éthylène/propylène/monomère diénique (EPDM), l'adhésion sur verre primé correspond à une force de pelage à 90° de 30-40 N/cm, mais est quasiment nulle sur matière plastique.

Par ailleurs, le procédé de l'invention n'exclue pas de conformer l'âme avec un bourrelet périphérique pour en augmenter la rigidité, ou avec un relief et/ou des prolongements tels que nervures, profilés, pattes ou oreilles, et/ou de disposer au sein de la matière plastique un ou plusieurs inserts, notamment métalliques. Cette disposition est particulièrement utile pour la préhension ou la fixation du produit de l'invention, ainsi que pour le montage définitif auquel il est destiné, comme dans une baie de carrosserie de véhicule automobile. Dans ce dernier cas, la formation de profilés périphériques adaptés permet d'envisager un montage du produit par l'intérieur du véhicule, c'est-à-dire par l'habitacle. Le cordon de colle est alors disposé sous le bord de la baie de carrosserie et n'est pas exposé aux rayons solaires. La protection du cordon de colle par un vernis formé à la périphérie de la face intérieure de la feuille devient naturellement superflue.

Les appendices formés à la périphérie du produit au cours de son injection peuvent être conservés, ou sciés en totalité ou en partie selon leur usage. Un ponçage peut être prévu après un tel sciage.

Un profilé périphérique de géométrie symétrique par rapport au plan du produit peut être opportun, par exemple dans le cas de surfaces transparentes latérales de véhicules de transport, l'une ou l'autre partie du profilé pouvant être sciée ultérieurement, selon qu'il s'agit de l'élément transparent droit ou gauche.

Par ailleurs, d'éventuels inserts peuvent être liés à l'incorporation dans le produit de fonctions particulières, telles qu'un feu stop dans une lunette arrière.

Le procédé de l'invention est donc économique, aisé et fiable et permet l'utilisation de nombreuses combinaisons de constituants, sans que le problème de leur compatibilité, notamment sur le plan de leurs températures de mise en oeuvre, ne se pose. En particulier, l'utilisation d'un moule à partie tournante permet d'obtenir des vitrages plastiques équipés d'un encapsulat, notamment élastomère, avec des durées de fabrication courtes et des rendements élevés, pour un investissement minimal en appareillages et machines, tout en maintenant la qualité optique requise.

## Revendications

1. Produit essentiellement plat et en matière plastique, au moins en partie transparent et dont une partie au moins de la surface extérieure est constituée par un ajout de matière plastique surmoulé au moins en partie encapsulé à la périphérie du produit, ledit produit comprenant en outre une âme en matière plastique et une peau disposée sur une face au moins de l'âme, en retrait par rapport aux bords de ladite face et à l'intérieur de la surface délimitée par la partie périphérique encapsulée de l'ajout de matière plastique, ladite peau comprenant en outre au moins un film en matière plastique supportant une couche anti-rayures.

2. Produit selon la revendication 1, **caractérisé en ce que** la peau, d'épaisseur au plus égale à 500 µm, de préférence comprise entre 50 et 300 µm, est constituée d'un ou plusieurs films en matériau plastique thermoformable, entre lesquels est interposée, ou sur lesquels est déposée le cas échéant, au moins une couche fonctionnelle, l'un au moins de ces films pouvant par ailleurs constituer lui-même une telle couche fonctionnelle.

3. Produit selon la revendication 2, **caractérisé en ce que** ledit matériau plastique thermoformable est choisi parmi les polycarbonate, polypropylène, poly(méthacrylate de méthyle), copolymère éthylène/acétate de vinyle, poly(téréphtalate d'éthylène), polyuréthane, polyvinylbutyral et copolymère cyclooléfinique.

4. Produit selon l'une des revendications 1 à 3, **caractérisé en ce que** la peau comprend la fonction hydrophobe/oléophobe incorporée dans la couche anti-rayures, ou greffée sur celle-ci ou encore recouvrant celle-ci avec interposition d'un film plastique support de la couche hydrophobe/oléophobe.

5. Produit selon l'une des revendications 1 à 4, **caractérisé en ce que** la peau comprend, sur tout ou partie de sa surface, une couche de décor et/ou de masquage, positionnée de préférence directement sous le film support de la couche anti-rayures.

6. Produit selon l'une des revendications 1 à 5, **caractérisé en ce que** la peau comprend une ou plusieurs couches optiquement sélectives.

7. Produit selon l'une des revendications 1 à 6, **caractérisé en ce que** la peau comprend un empilement de couches antireflet.

8. Produit selon l'une des revendications 1 à 7, **caractérisé en ce que** la peau comprend un réseau conducteur d'électricité.

9. Produit selon l'une des revendications 1 à 8, **caractérisé en ce que** l'âme est constituée d'un matériau thermoplastique tel que polycarbonate, poly(méthacrylate de méthyle), copolymère éthylène/acétate de vinyle, poly(téréphtalate d'éthylène), polyuréthane, copolymère cyclooléfinique ou d'une résine ionomère, ou d'un matériau thermodurcissable ou thermoréticulable du type polyuréthane, polyester insaturé, copolymère éthylène/acétate de vinyle, ou encore d'une association de plusieurs épaisseurs d'une même ou de plusieurs de ces matières plastiques.

10. Produit selon l'une des revendications 1 à 9, **caractérisé en ce que** la partie périphérique encapsulée de l'ajout de matière plastique est constituée d'un ou plusieurs matériaux élastomères et, en particulier, thermoplastiques.

11. Procédé de fabrication d'un produit selon l'une des revendications 1 à 10, comprenant l'injection d'une première, puis d'au moins une seconde matière plastique dans un unique moule.

12. Procédé selon la revendication 11, comprenant une opération de transfert par rotation du produit de l'injection de la première matière plastique, d'une première empreinte où a préalablement eu lieu l'injection de la première matière plastique, dans une seconde empreinte servant à l'injection ultérieure de la seconde matière plastique.

13. Procédé de fabrication d'un produit selon l'une des revendications 1 à 10, comprenant l'injection dans un premier moule d'une première matière plastique, puis le transfert du produit de cette injection dans un second moule, dans lequel est injectée une seconde matière plastique.

14. Procédé selon l'une des revendications 11 à 13, dans lequel une ou deux peaux, éventuellement thermoformées au préalable, sont maintenues en fond de moule par tout moyen approprié, notamment par aspiration et/ou soufflage et/ou effet électrostatique, avant l'injection de ladite première matière plastique.

15. Procédé selon l'une des revendications 11 à 14, comprenant une opération initiale de formation d'un réseau conducteur d'électricité par sérigraphie de métal.

16. Application du produit selon l'une des revendications 1 à 10 en tant que vitrage pour les véhicules de transport ou le bâtiment.

## Patentansprüche

1. Erzeugnis, das im Wesentlichen flach ist, aus Kunststoff besteht, wenigstens teilweise transparent ist, wovon mindestens ein Teil der Außenfläche von einem Kunststoffzusatz gebildet wird, der aufgeformt ist und den Umfang des Erzeugnisses wenigstens teilweise ummantelt, und welches außerdem einen Kunststoffkern und eine Außenschicht umfasst, die auf mindestens einer Seite des Kerns angeordnet, in Bezug auf den Rand dieser Seite zurückgesetzt und in der Oberfläche von dem Umfangsbereich, der von dem Kunststoffzusatz ummantelt wird, begrenzt ist und darüber hinaus mindestens einen Kunststofffilm umfasst, der eine kratzfeste Schicht trägt.

2. Erzeugnis nach Anspruch 1, **dadurch gekennzeichnet, dass** die Außenschicht, deren Dicke höchstens 500 µm und vorzugsweise 50 bis 300 µm beträgt, aus einem oder mehreren thermoplastischen Kunststofffilmen besteht, zwischen welchen mindestens eine Funktionsschicht eingefügt oder auf welchen gegebenenfalls mindestens eine solche aufgebracht ist, wobei weiterhin mindestens einer dieser Filme selbst eine derartige Funktionsschicht bilden kann.

3. Erzeugnis nach Anspruch 2, **dadurch gekennzeichnet, dass** der Thermoplast aus Polycarbonat, Polypropylen, Polymethylmethacrylat, Ethylen-Vinylacetat-Copolymer, Polyethylenterephthalat, Polyurethan, Polyvinylbutyral und cycloolefinischem Copolymer ausgewählt ist.

4. Erzeugnis nach einem der Ansprüche 1 bis 3, **dadurch gekennzeichnet, dass** die Außenschicht die hydrophobe/oleophobe Funktion umfasst, die in die kratzfeste Schicht eingebaut bzw. auf diese aufgepfropft worden ist oder diese über einen die hydrophobe/oleophobe Schicht tragenden Kunststofffilm bedeckt.

5. Erzeugnis nach einem der Ansprüche 1 bis 4, **dadurch gekennzeichnet, dass** die Außenschicht auf ihrer gesamten oder einem Teil ihrer Oberfläche eine verschönernde und/oder verdeckende Schicht umfasst, die vorzugsweise direkt unter dem die kratzfeste Schicht tragenden Film angeordnet ist.

6. Erzeugnis nach einem der Ansprüche 1 bis 5, **dadurch gekennzeichnet, dass** die Außenschicht eine oder mehrere optisch selektive Schichten umfasst.

7. Erzeugnis nach einem der Ansprüche 1 bis 6, **dadurch gekennzeichnet, dass** die Außenschicht einen Antireflexschichtaufbau umfasst.

8. Erzeugnis nach einem der Ansprüche 1 bis 7, **dadurch gekennzeichnet, dass** die Außenschicht ein elektrisch leitfähiges Netz enthält.

9. Erzeugnis nach einem der Ansprüche 1 bis 8, **dadurch gekennzeichnet, dass** der Kern aus einem Thermoplast wie Polycarbonat, Polymethylmethacrylat, Ethylen-Vinylacetat-Copolymer, Polyethylenterephthalat, Polyurethan und cycloolefinisches Copolymer, einem Ionomerharz, einem wärmeaushärtbaren bzw. wärmevernetzbaren Material vom Typ Polyurethan, ungesättigter Polyester und Ethylen-Vinylacetat-Copolymer oder einer Vereinigung von mehreren Dicken aus ein und demselben oder mehreren dieser Kunststoffe besteht.

10. Erzeugnis nach einem der Ansprüche 1 bis 9, **dadurch gekennzeichnet, dass** der mit dem Kunststoffzusatz ummantelte Umfangsbereich aus einem oder mehreren elastomeren und insbesondere thermoplastischen Materialien besteht.

11. Verfahren zur Herstellung eines Erzeugnisses nach einem der Ansprüche 1 bis 10, welches das Spritzgießen eines ersten und anschließend mindestens eines zweiten Kunststoffs in eine einzige Form umfasst.

12. Verfahren nach Anspruch 11, das einen Übergabevorgang durch Drehung des Produkts aus dem Spritzgießen des ersten Kunststoffs von einem ersten Formnest, in welchem zuvor das Spritzgießen des ersten Kunststoffs stattgefunden hat, in ein zweites Formnest, das zum anschließenden Spritzgießen des zweiten Kunststoffs dient, umfasst.

13. Verfahren zur Herstellung eines Erzeugnisses nach einem der Ansprüche 1 bis 10, welches das Spritzgießen eines ersten Kunststoffs in eine erste Form und anschließend die Übergabe des Produkts dieses Spritzgießens in eine zweite Form, in welcher ein zweiter Kunststoff spritzgegossen wird, umfasst.

14. Verfahren nach einem der Ansprüche 11 bis 13, in welchem eine/zwei Außenschicht/en, die gegebenenfalls zuvor wärmegeformt worden ist/sind, von einem beliebigen geeigneten Mittel, insbesondere durch Ansaugen und/oder Blasen und/oder einen elektrostatischen Effekt vor dem Spritzgießen des ersten Kunststoffs am Boden der Form festgehalten wird/werden.

15. Verfahren nach einem der Ansprüche 11 bis 14, das einen anfänglichen Arbeitsgang zur Bildung eines elektrisch leitfähigen Netzes durch Metallsiebdruck umfasst.

16. Verwendung des Erzeugnisses nach einem der Ansprüche 1 bis 10 als Glasscheibe für Transportfahrzeuge oder Gebäude.

## Claims

1. Substantially flat, plastic, at least partly transparent product part at least of whose outer surface is composed of an overmoulded plastic addition at least partly encapsulated at the periphery of the product, said product further comprising a plastic core and a skin disposed on at least one face of the core, recessed relative to the edges of said face and to the interior of the surface delimited by the encapsulated peripheral part of the plastic addition, said skin further comprising at least one plastic film which carries a scratch resistance layer.

2. Product according to Claim 1, **characterized in that** the skin, with a thickness of not more than 500 µm, preferably of between 50 and 300 µm, is composed of one or more thermoformable plastic material films between which is interposed, or on which is deposited, where appropriate, at least one functional layer, one at least of these films being able, furthermore, to constitute itself such a functional layer.

3. Product according to Claim 2, **characterized in that** said thermoformable plastic material is selected from polycarbonate, polypropylene, poly(methyl methacrylate), ethylene/vinyl acetate copolymer, poly(ethylene terephthalate), polyurethane, polyvinylbutyral and cycloolefin copolymer materials.

4. Product according to one of Claims 1 to 3, **characterized in that** the skin comprises the hydrophobic/oleophobic function incorporated in the scratch resistance layer or grafted on to said layer or else covering said layer with interposition of a film which is plastic and carries the hydrophobic/oleophobic layer.

5. Product according to one of Claims 1 to 4, **characterized in that** the skin comprises over all or part of its surface a decorative and/or masking layer positioned preferably directly under the carrier film of the scratch resistance layer.

6. Product according to one of Claims 1 to 5, **characterized in that** the skin comprises one or more optically selective layers.

7. Product according to one of Claims 1 to 6, **characterized in that** the skin comprises a stack of anti-reflection layers.

8. Product according to one of Claims 1 to 7, **characterized in that** the skin comprises a network which conducts electricity.

9. Product according to one of Claims 1 to 8, **characterized in that** the core is composed of a thermoplastic material such as polycarbonate, poly(methyl methacrylate), ethylene/vinyl acetate copolymer, poly(ethylene terephthalate), polyurethane, cycloolefin copolymer or of an ionomer resin, or of a thermosetting or heat-crosslinkable material of the polyurethane, unsaturated polyester or ethylene/vinyl acetate copolymer type, or else of a combination of two or more thicknesses of one or more of these plastics.

10. Product according to one of Claims 1 to 9, **characterized in that** the encapsulated peripheral part of the plastic addition is composed of one or more elastomeric and, in particular, thermoplastic materials.

11. Process for producing a product according to one of Claims 1 to 10, comprising injecting a first plastic and then at least one second plastic into a single mould.

12. Process according to Claim 11, comprising an operation of rotational transfer of the product of the injection of the first plastic from a first cavity in which the injection of the first plastic took place beforehand into a second cavity serving for subsequent injection of the second plastic.

13. Process for producing a product according to one of Claims 1 to 10, comprising injecting a first plastic into a first mould and then transferring the product of this injection to a second mould into which a second plastic is injected.

14. Process according to one of Claims 11 to 13, in which one or two skins, optionally thermoformed beforehand, are held at the base of the mould by any appropriate means, in particular by suction and/or blowing and/or electrostatic effect, before said first plastic is injected.

15. Process according to one of Claims 11 to 14, comprising an initial operation of forming a network which conducts electricity, by screen printing of metal.

16. Application of the product according to one of Claims 1 to 10 as glazing for transportation vehicles or architecture.
